# EUROPEAN PATENT SPECIFICATION

(11) **EP 4 327 643 B1**
(45) Date of publication and mention of the grant of the patent: **12.08.2026**
(21) Application number: 23179151.8
(22) Date of filing: 14.06.2023
(51) Int. Cl.: A01D 34/68

(54) **MOWER**
MÄHER
TONDEUSE

(30) Priority: 05.07.2022 CN 202210790691
(43) Date of publication of application: 28.02.2024
(73) Proprietor: Nanjing Chervon Industry Co., Ltd., Nanjing, Jiangsu 211106 (CN)
(72) Inventor: GENG, Yazhou, Nanjing, Jiangsu 211106, (CN); XU, Haishen, Nanjing, Jiangsu 211106, (CN); ZHANG, Yuhao, Nanjing, Jiangsu 211106, (CN)
(74) Representative: Sun, Yiming

(56) References cited:
- JP-U- S62 167 521
- US-A- 5 884 463
- US-A1- 2003 217 541
- US-A1- 2003 217 542
- US-A1- 2008 307 762
- US-A1- 2010 115 901
- US-A1- 2016 309 649

## Description

### TECHNICAL FIELD

The present invention relates to the technical field of power tools and, in particular, to a mower.

### BACKGROUND

A mower includes a housing, and the housing is formed with a grass shredding chamber and a grass collecting port connects the inside of the grass shredding chamber to the outside. When a plug attachment is provided at the grass collecting port, the mower is in a grass shredding mode. When the plug attachment is removed from the grass collecting port, the mower is in a grass collection mode. The mower can switch between the grass shredding mode and the grass collection mode through the plug attachment. In the existing art, in one solution, the plug attachment is detachably mounted on the mower, the plug attachment is mounted when the mower is in the grass shredding mode, and the plug attachment is detached when the mower is in the grass collection mode. However, the plug attachment needs to be repeatedly mounted or detached during the switch between the grass shredding mode and the grass collection mode, bringing a lot of inconvenience to the user. In another solution, a rotary unit is provided, a baffle plate is rotatably attached to the housing of the mower, and the position of the baffle plate is controlled to switch between the grass shredding mode and the grass collection mode, which is more convenient to operate.

With the use of time, the rotary unit is deformed or the installation structure is loosened, resulting in the position shift and the formation of a gap between the rotary unit and the housing, and the mowed grass clippings pass through the gap and cause blockage, affecting the grass collection effect. US 2003/217541 A1 discloses a convertible lawnmower including a cutter housing having a discharge opening, an engine mount centrally positioned on the cutter housing, a prime mover supported on the engine mount, a rotary mulching blade coupled to the prime mover to rotate in a cutting plane about a rotation axis within the cutter housing, a cover and a fin extending from the cover toward the cutting plane. The cover is movably mounted within the cutter housing in a plane parallel to the cutting plane and between a full bagging position where the discharge opening is unobstructed by the cover and a full mulching position where the cover obstructs the discharge opening. US 5 884 463 A discloses a mowing mechanism having a spindle rotatively driven by a power source, a blade having a radially inner portion coupled for rotation with the spindle and a radially outer portion for cutting vegetation, a housing within which the blade rotates, and a disc coupled for rotation with the spindle and operatively carried within the housing for rotation with the blade and spaced above the blade. The inner and outer portions of the disc serve to channel air and clippings to the inner portion of the blade. The rotating disc prevents accumulation of the grass clippings beneath the disc and housing, and enhances airflow within the housing due to viscous drag or friction between the disc and the air within the housing. JP S62 167521 U discloses a riding lawn mower. US 2008/307762 A1 discloses lawn mower including a mower deck having an opening therein forming a passageway through which grass clippings exit the cutting chamber during select modes of operation. US 2010/115901 A1 discloses a lawn mower having an exit tunnel that is opened and closed by a pivotal mulch door to convert the mower between collecting and mulching modes of operation, wherein an operating handle is fixed to the mulch door and includes a vertically reciprocal push button for releasing locking tabs that engage detents for holding the mulch door in the open and closed positions thereof. US 2003/217542 A1 discloses a lawn mower which includes a cutter housing and an engine mount on the cutter housing. A prime mover is supported on the engine mount and a blade is coupled to the prime mover to rotate within the cutter housing. A plate translates within the cutter housing between a first position and a second position. Preferably, the cutter housing includes a discharge opening and the blade is a mulching blade. The first position is a full bagging position where the discharge opening is substantially unobstructed by the plate and the second position is a full mulching position where the plate substantially obstructs the discharge opening. US 2016/309649 A1 discloses a grass cutter having a duct which extends in a conveyance direction of grass clippings and a conveyance path for the grass clippings formed inside of the duct.

### SUMMARY

The present invention is defined by the independent claim. Advantageous embodiments are described in the dependent claims, the following description and the drawings. Present invention provides a mower. The mower inter alia includes a cutter, a deck, a power unit, and a rotary unit. The cutter consists of at least one blade. The deck includes a housing. The housing is formed with a cutting cavity, and the cutting cavity connects with a grass discharge passage through a first outlet. The power unit drives the cutter to rotate in the cutting cavity. The rotary unit includes a rotary body. The rotary body includes a blocking portion and a connecting portion connected to each other, and the connecting portion is rotatably connected to the housing. The rotary unit is capable of rotating to a first position or a second position. When the rotary unit is at the first position, the blocking portion blocks the first outlet. When the rotary unit is at the second position, the first outlet is opened. The deck further includes a first base plate, the first base plate is at least partially located below the rotary unit, and the first base plate mates with the blocking portion to limit the downward movement of the blocking portion.

In some examples, the first base plate is in contact with the blocking portion, or the first base plate mates with the blocking portion with a gap between the first base plate and the blocking portion.

In some examples, the housing and the first base plate form the grass discharge passage, the first base plate is disposed on a lower side of the housing, and grass clippings are collected through the grass discharge passage.

In some examples, the blocking portion of the rotary unit includes a first surface facing the first base plate, and the distance between the first surface and the first base plate is greater than or equal to 0 and less than or equal to 4 mm.

In some examples, when the housing is viewed from bottom to top, the second inner wall of the cutting cavity is basically circular, and the first inner wall of the cutting cavity is also basically circular.

In some examples, when the deck is placed on a horizontal plane, the depth of the cutting cavity of the housing is basically the same in any section through the center of the housing or the center of rotation of the cutter and perpendicular to the horizontal plane.

According to present invention, the deck further includes a second base plate, the second base plate is connected to the first base plate, the second base plate and the first base plate are mounted to the housing, the second base plate is also located below the rotary unit, and the second base plate is in contact with the blocking portion, or the second base plate mates with the blocking portion with a gap between the second base plate and the blocking portion.

In some examples, the blocking portion is rotatably connected to an inner side of the housing, and the rotary unit further includes a protrusion convexly disposed on the blocking portion.

In some examples, the mower further includes an operation assembly connected to the rotary unit, where an engagement groove is disposed on the deck, and the operation assembly is capable of being limited in the engagement groove.

In some examples, a third position is positioned between the first position and the second position, and the rotary unit is rotatable to the third position so that the first outlet is partially opened.

In some examples, the blocking portion of the rotary unit comprises a first surface facing the first base plate, and a distance between the first surface and the first base plate is greater than or equal to 0 and less than or equal to 2 mm.

In some examples, the first base plate and the second base plate could be integrally formed.

In some examples, the connecting portion and the blocking portion can be integrated formed.

In some examples, a support is disposed at the top of the deck, a guide groove is opened on the support along the circumferential direction, the operation assembly passes through and is slidably connected to the guide groove.

In some examples, a support is disposed at the top of the deck, the engagement groove is disposed on a groove wall of the guide groove, and the operation assembly can be limited by the engagement groove.

### BRIEF DESCRIPTION OF DRAWINGS

FIG. 1 is a structural view of a mower according to an example of the present invention;
FIG. 2 is an assembly view of a deck and a rotary unit according to an example of the present invention;
FIG. 3 is an assembly view of a housing, a second base plate, and a rotary unit according to an example of the present invention;
FIG. 4 is a structural view of a housing from a perspective according to an example of the present invention;
FIG. 5 is a structural view of a rotary unit at a second position from a perspective according to an example of the present invention;
FIG. 6 is a structural view of a rotary unit at a second position from another perspective according to an example of the present invention;
FIG. 7 is a structural view of a rotary unit at a first position from a first perspective according to an example of the present invention;
FIG. 8 is a structural view of a rotary unit at a first position from a second perspective according to an example of the present invention;
FIG. 9 is a structural view of a first base plate, a second base plate, and a rotary unit at a second position according to an example of the present invention;
FIG. 10 is a structural view of a first base plate, a second base plate, and a rotary unit at a first position according to an example of the present invention;
FIG. 11 is an exploded view of a first base plate, a second base plate, and a rotary unit from a first perspective according to an example of the present invention;
FIG. 12 is an exploded view of a first base plate, a second base plate, and a rotary unit from a second perspective according to an example of the present invention;
FIG. 13 is an assembly view of a first base plate and a second base plate according to an example of the present invention;
FIG. 14 is a bottom view of a deck according to an example of the present invention;
FIG. 15 is a sectional view of FIG. 14 taken along 0-0;
FIG. 16 is a structural view of a rotary body from a first perspective according to an example of the present invention;
FIG. 17 is a structural view of a rotary body from a second perspective according to an example of the present invention;
FIG. 18 is a sectional view of a rotary body according to an example of the present invention;
FIG. 19 is an assembly view of an operation assembly and a deck from a first perspective according to an example of the present invention;
FIG. 20 is an enlarged view of part I in FIG. 19;
FIG. 21 is an assembly view of an operation assembly and a deck from a second perspective according to an example of the present invention;
FIG. 22 is a structural view of a deck with a support according to an example of the present invention;
FIG. 23 is an assembly view of a support and a rotary unit from a first perspective according to an example of the present invention;
FIG. 24 is an assembly view of a support and a rotary unit from a second perspective according to an example of the present invention;
FIG. 25 is an exploded view of a rotary unit according to an example of the present invention;
FIG. 26 is a structural view of a housing from another perspective according to an example of the present invention;
FIG. 27 is an assembly view of a deck, a power unit, and a cutter according to an example of the present invention;
FIG. 28 is a structural view of a rotary body according to an example of the present invention;
FIG. 29 is a sectional view of a rotary body according to an example of the present invention;
FIG. 30 is a structural view of an operation assembly disengaged from an engagement groove according to an example of the present invention;
FIG. 31 is a structural view of an operation assembly limited in an engagement groove according to an example of the present invention;
FIG. 32 is an exploded view of an operation assembly of a rotary body according to an example of the present invention;
FIG. 33 is a structural view of another operation assembly of a rotary body according to an example of the present invention; and
FIG. 34 is a structural view of another operation assembly of a rotary body disengaged from and limited in an engagement groove according to an example of the present invention.

### DETAILED DESCRIPTION

To make solved technical problems, adopted technical solutions, and achieved technical effects of the present invention more apparent, the technical solutions in examples of the present invention are further described in detail below in conjunction with the drawings. Apparently, the examples described below are part, not all, of the examples of the present application.

In the description of the present invention, the terms "joined", "connected", and "fixed" are to be understood in a broad sense unless otherwise expressly specified and limited. For example, the term "connected" may refer to "fixedly connected", "detachably connected", or integrated, may refer to "mechanically connected" or "electrically connected", or may refer to "connected directly", "connected indirectly through an intermediary", "connected inside two elements", or "interaction relations between two elements". For those of ordinary skill in the art, specific meanings of the preceding terms in the present invention may be understood based on specific situations.

In the present invention, unless otherwise expressly specified and limited, when a first feature is described as "on" or "below" a second feature, the first feature and the second feature may be in direct contact or be in contact via another feature between the two features instead of being in direct contact. Moreover, when the first feature is described as "on", "above", or "over" the second feature, the first feature is right on, above, or over the second feature or the first feature is obliquely on, above, or over the second feature, or the first feature is simply at a higher level than the second feature. When the first feature is described as "under", "below", or "underneath" the second feature, the first feature is right under, below, or underneath the second feature or the first feature is obliquely under, below, or underneath the second feature, or the first feature is simply at a lower level than the second feature.

This example provides a mower 100. The mower could be a walk behind lawn mower, a riding-on lawn mower, a stand-on lawn mower and a mowing robot which can trim grass without a user to push, stand on or ride on it. That is to say, the mower could be any vehicle that can perform the function of trimming grass.

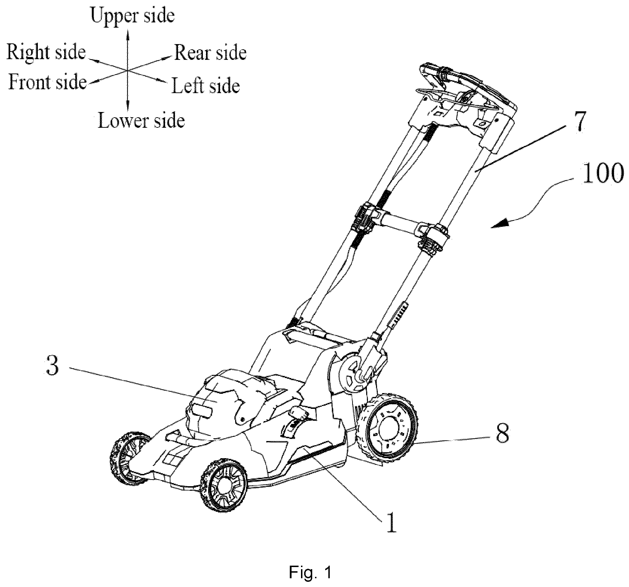

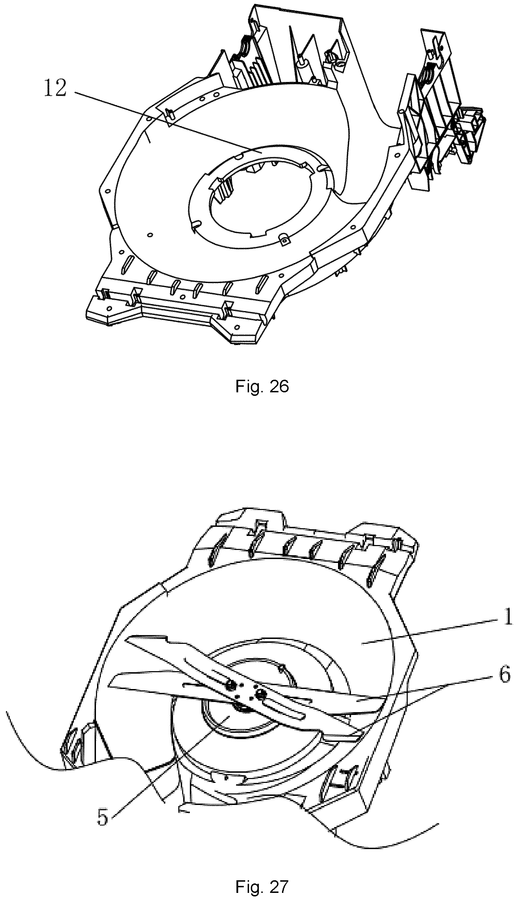

As shown in FIGS. 1 and 27, the mower 100 includes a deck 1, a power unit 5, a cutter 6, a handrail 7, and drive wheels 8. The handrail 7, the drive wheels 8, the power unit 5, and the cutter 6 are all mounted on the deck 1. When the handrail 7 is pushed, the deck 1 moves with the drive wheels 8, the power unit 5 drives the cutter 6 to rotate, and the cutter 6 cuts grass as the deck 1 moves. Optionally, the mower 100 further includes a protective cover 3, where the protective cover 3 is disposed on the upper side of the deck 1 and covers the power unit 5 to play a protective role.

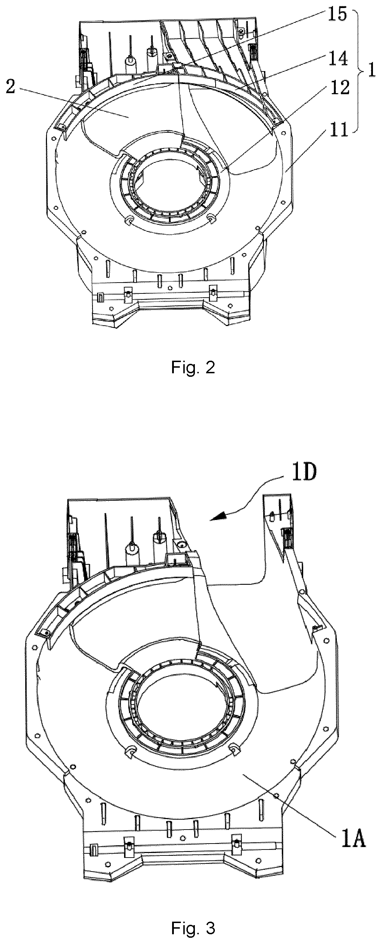

In an example, as shown in FIGS. 2 to 14, the deck 1 includes a housing 11 and a first base plate 14, the first base plate 14 is at least partially located below a rotary unit 2, and the first base plate 14 mates with a blocking portion 211 so that the blocking portion 211 is constrained and the downward movement of the blocking portion 211 is limited. In an example, the first base plate 14 is connected to the housing 11, the first base plate 14 is located below the rotary unit 2, the first base plate 14 is in contact with the rotary unit 2, or the first base plate 14 mates with the rotary unit 2 with a gap between the first base plate 14 and the rotary unit 2, the rotary unit 2 is pressed against the first base plate 14, and the rotary unit 2 is restricted so that the rotary unit 2 will not be deformed or move downward due to the interaction between the structures or the impact of the grass when used for a long time, the gap between the rotary unit 2 and the housing 11 and the first base plate 14 is prevented from being too large, the grass clippings are prevented from being caught in the gap and causing the rotary unit 2 to have a locked-rotor, and the better use effect is ensured. In this solution, the deck 1 and the rotary unit 2 have simple structures and are easy to manufacture and assemble, thereby reducing the cost.

In an example, the first base plate 14 is in direct contact with the rotary unit 2 so that the grass clippings cannot be caught in the gap between the rotary unit 2 and the housing 11 and the first base plate 14. In an example, the first base plate 14 mates with the rotary unit 2 with a gap between the first base plate 14 and the rotary unit 2, where the gap is less than or equal to 4 mm, thereby keeping the possible gap within a range that has less effect on the generation of grass blockage. In an example, the gap between the first base plate 14 and the rotary unit 2 is less than or equal to 2 mm.

The first base plate 14 is in contact with the rotary unit 2, or the first base plate 14 mates with the rotary unit 2 with a gap between the first base plate 14 and the rotary unit 2. Such a mate with a gap can reduce the friction between the first base plate 14 and the rotary unit 2 on the one hand so that the rotary unit 2 can rotate smoothly when switching positions, and on the other hand, serious grass blockage is not caused. If the first base plate 14 is in direct contact with the rotary unit 2, the first base plate 14 and the rotary unit 2 are made of relatively wear-resistant material.

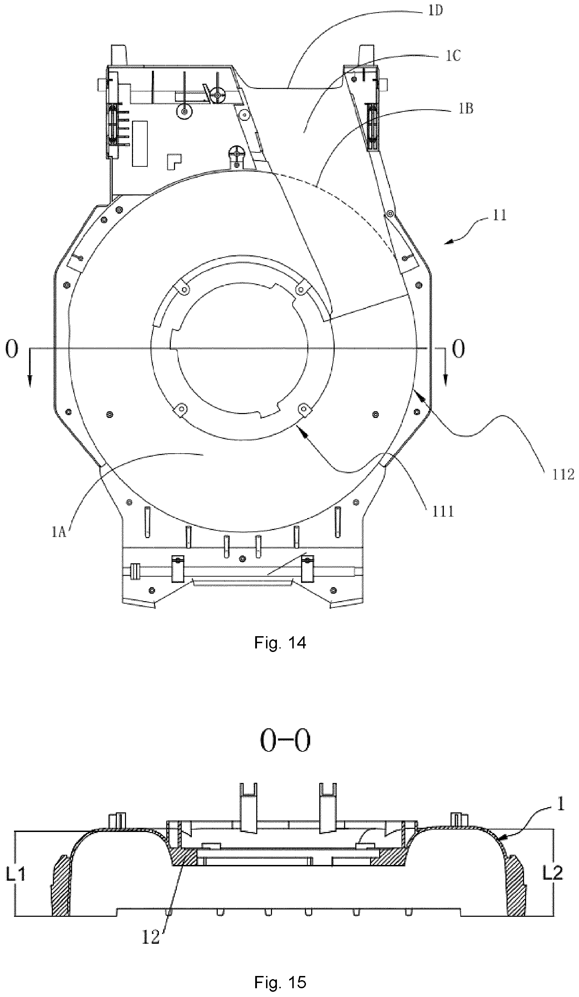

In an example, the housing 11 is formed with a cutting cavity 1A, the cutter 6 rotates in the cutting cavity 1A to cut grass, the housing 11 and the first base plate 14 form a grass discharge passage 1C, and the grass clippings are collected through the grass discharge passage 1C, the first base plate 14 is disposed on the lower side of the housing 11, the cutting cavity 1A connects with the grass discharge passage 1C through a first outlet 1B, and the grass discharge passage 1C connects with the outside through a second outlet 1D as shown FIG. 14 for details. The power unit 5 drives the cutter 6 to rotate in the cutting cavity 1A. The mower 100 further includes the rotary unit 2. The rotary unit 2 includes a rotary body 21. The rotary body 21 includes the blocking portion 211 and a connecting portion 212 connected to each other. The connecting portion 212 is rotatably connected to the housing 11. The connecting portion 212 drives the blocking portion 211 to rotate.

In an example, the first base plate 14 is not a grass collecting base plate of the grass discharge passage 1C, and the first base plate 14 may be an additional part mounted on the housing 11 or the grass collecting base plate. Moreover, the first base plate 14 may be integrally formed with the housing 11 or the grass collecting base plate.

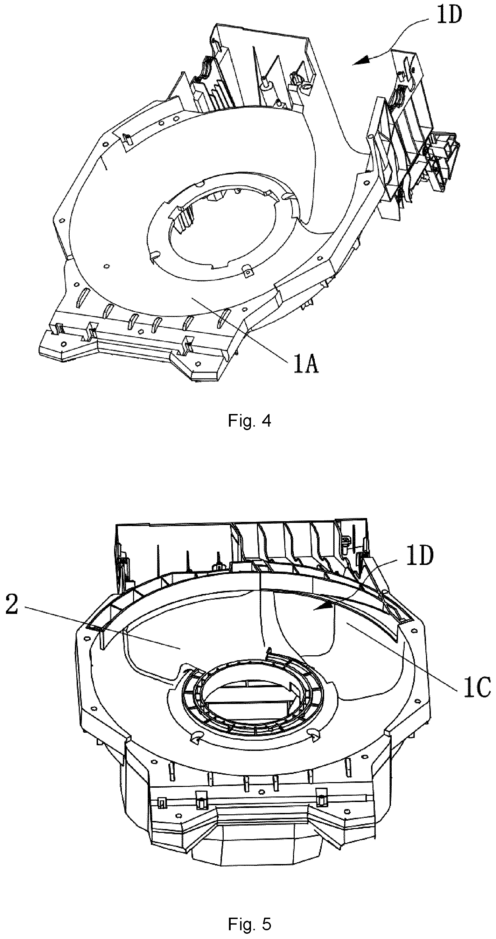

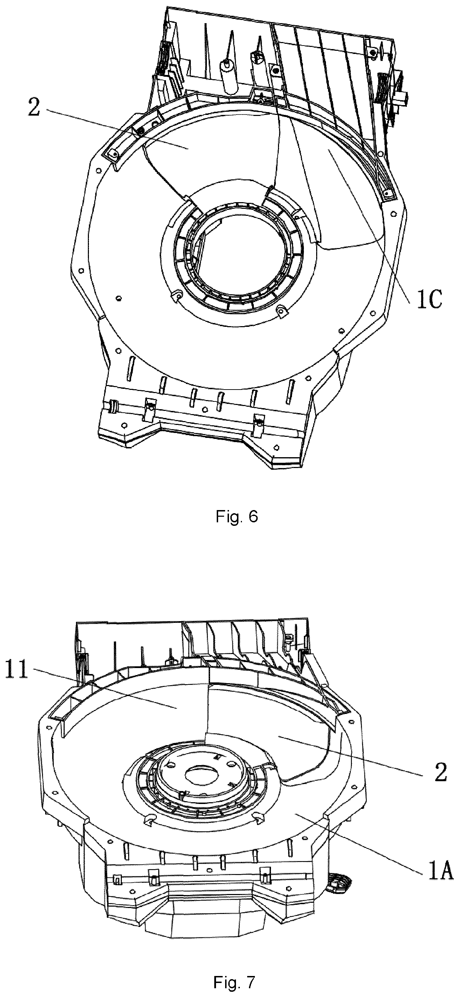

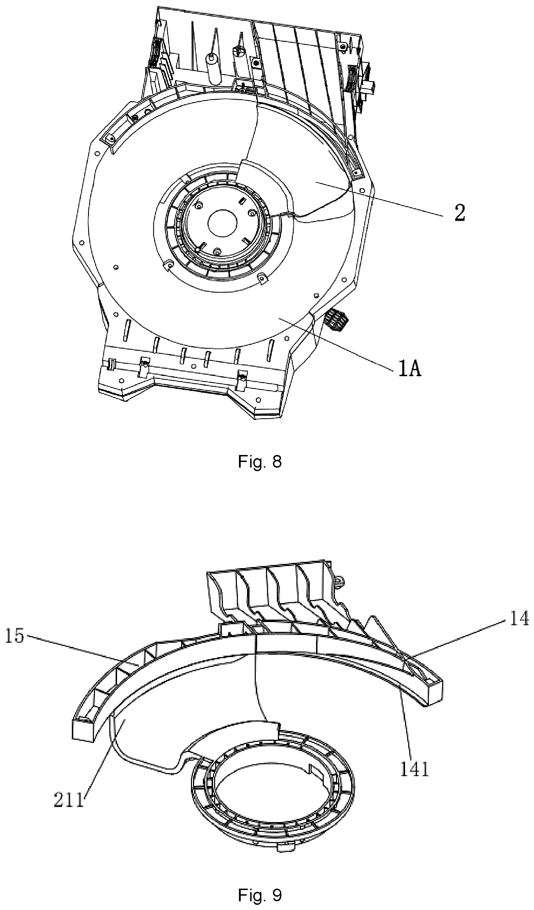

In an example, as shown in FIGS 3 to 8 and FIG. 14, the rotary unit 2 is rotatable to a first position or a second position. As shown in FIGS. 7 and 8, when the rotary unit 2 is at the first position, the blocking portion 211 blocks the first outlet 1B so that the cutting cavity 1A is separated from the grass discharge passage 1C, and the mower 100 is in a grass shredding mode. In the grass shredding mode, the grass is repeatedly cut by the cutter 6 in the cutting cavity 1A, the lifting force generated by the cutter 6 driven to rotate by the power unit 5 throws the grass upward, the grass is cut by the cutter 6 again on the way down, and the repeated cutting can make the grass more shredded. As shown in FIGS. 5 and 6, when the rotary unit 2 is at the second position, the first outlet 1B is opened so that the grass discharge passage 1C connects with the cutting cavity 1A, the mower 100 enters a grass collection mode, and the shredded grass from the cutting cavity 1A enters the grass discharge passage 1C through the first outlet 1B and then is collected through the second outlet 1D. In an example, the grass may be collected directly from the second outlet 1D, or the grass may enter a grass collection bag, or the grass may be collected directly to the outside of the mower 100. The connecting portion 212 rotatably connects the blocking portion 211 to the deck 1 and the blocking portion 211 can switch between the first position and the second position so that the mower 100 can switch between the grass shredding mode and the grass collection mode without repeated disassembly and installation, which is convenient to operate.

In some examples, multiple positions are provided between the first position and the second position, and the rotary unit 2 is rotatable to one of the multiple positions, so as to adjust the size of the first outlet 1B being opened. Specifically, multiple gears may be set and in one-to-one correspondence with the multiple positions. When the rotary unit 2 is adjusted to a certain gear, the first outlet 1B is opened to the corresponding size. The number of gears is specifically set according to actual situations, which is not limited. In an example, a third position is positioned between the first position and the second position, and the rotary unit 2 is rotatable to the third position so that the blocking portion 211 blocks part of the first outlet 1B and the other part of the first outlet 1B is opened, so as to achieve the effect of partial grass collection and partial grass dropping. Further, the third position is provided in the middle of the first position and the second position, and when the rotary unit 2 is rotated to the third position, the blocking portion 211 blocks half of the first outlet 1B.

In some examples, the connecting portion 212 and the blocking portion 211 may be an integrated structure or a split structure.

In this example, as shown in FIGS. 9 to 13, the blocking portion 211 includes a first surface 2114 facing the first base plate 14, the distance between the first surface 2114 and the first base plate 14 is less than or equal to 2 mm, and the first surface 2114 of the blocking portion 211 is pressed against the first base plate 14 when the rotary body 21 is at the first position or during rotation so that the rotary body 21 is restricted, the rotary body 21 will not be deformed or move downward due to the effect of gravity, the interaction between the structures, or the impact of the grass when used for a long time, the gap between the rotary body 21 and the housing 11 and the first base plate 14 is avoided, the grass clippings are prevented from being caught in the gap and causing the rotary body 21 to have a locked-rotor, and the better use effect is ensured.

In an example, the first surface 2114 is in direct contact with the first base plate 14. In an example, the distance between the first surface 2114 and the first base plate 14 is less than or equal to 1 mm. In an example, the distance between the first surface 2114 and the first base plate 14 is greater than 1 mm and less than or equal to 2 mm.

In some examples, the first base plate 14 and the housing 11 may be an integrated structure or a split structure, which is not limited.

As shown in FIGS. 2 to 13, the deck 1 further includes a second base plate 15, the second base plate 15 is connected to the first base plate 14, the second base plate 15 and the first base plate 14 are mounted to the housing 11, the second base plate 15 is also located below the rotary unit 2, and the second base plate 15 is in contact with the blocking portion 211, or the second base plate 15 mates with the blocking portion 211 with a gap between the second base plate 15 and the blocking portion 211. When the blocking portion 211 is at the second position, the first surface 2114 abuts against a third surface 151 of the second base plate 15. When the blocking portion 211 is at the first position, the first surface 2114 abuts against a second surface 142 of the first base plate 14. No matter the blocking portion 211 is at the first position or the second position, the second surface 142 or the third surface 151 always abuts against the first surface 2114 and is used for pressing the blocking portion 211 so that the rotary body 21 is restricted and further prevented from having a locked-rotor, and the use effect is improved.

In this example, as shown in FIGS. 9 to 11, a blocking edge 141 extends from a side of the second base plate 15 facing the cutting cavity 1A, the second surface 142 is disposed at the blocking edge 141, and the first surface 2114 is in contact with the blocking edge 141.

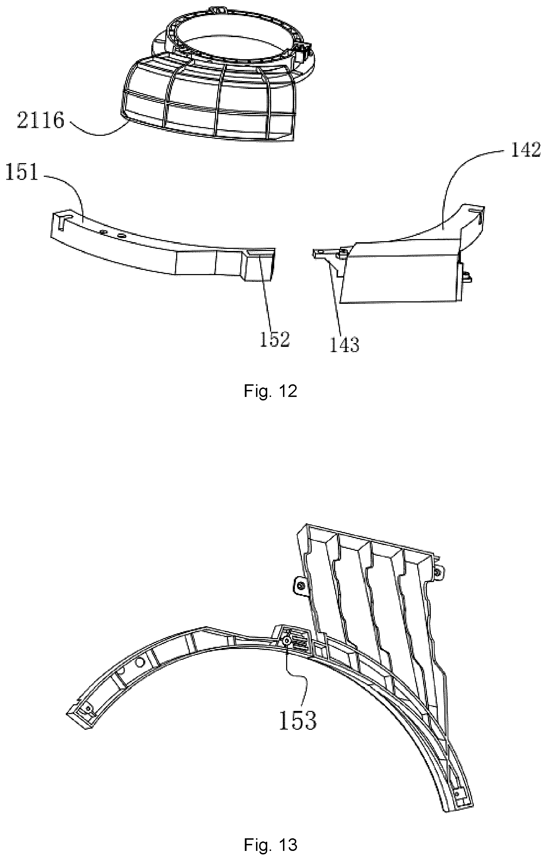

Optionally, as shown in FIG. 12, the outer circumferential surface of an end of the blocking portion 211 facing the first base plate 14 and the second base plate 15 is a fourth surface 2116. When the rotary unit 2 is at the second position, the fourth surface 2116 can rest against a second inner wall 112 of the housing 11 so that the circumferential deformation of the blocking portion 211 or the position shift due to the loosening of the structure can be avoided, and the grass is prevented from being caught between the housing 11 and the blocking portion 211 and causing a locked-rotor, thereby further improving the structural reliability.

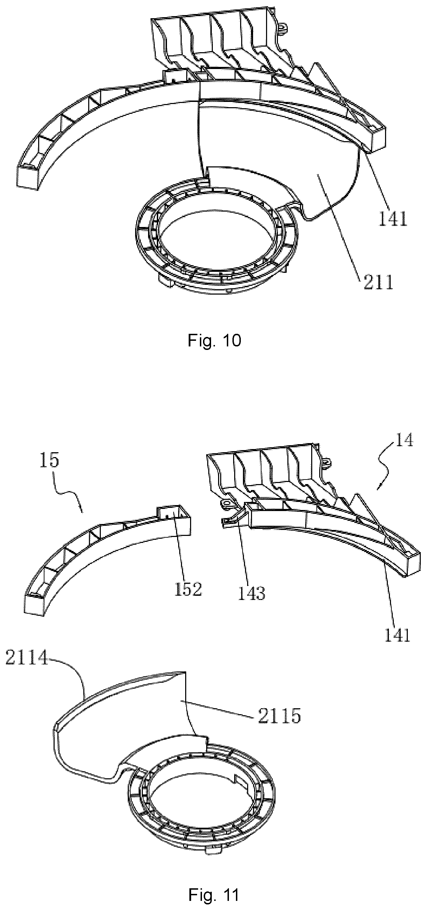

In this example, as shown in FIGS. 10 to 12, a first coupling portion 143 is disposed on a side of the first base plate 14 facing the second base plate 15, and a second coupling portion 152 is disposed on a side of the second base plate 15 facing the first base plate 14. The first coupling portion 143 is inserted into the second coupling portion 152 so that the hole of the first coupling portion 143 is aligned with the hole of the second coupling portion 152, a screw hole 153 is formed, and a screw passes through the screw hole 153 to fix the first base plate 14 and the second base plate 15 to the housing 11, thereby achieving a detachable connection between the first base plate 14, the second base plate 15, and the deck 1.

In some examples, the first base plate 14 and the second base plate 15 may be integrally formed.

When the rotary unit 2 rotates from the second position to the first position, a front end portion 2115 of the blocking portion 211 can be connected to a first inner wall 111 of the housing 11 with a smooth transition. As shown in FIGS. 5 and 6, in the grass collection mode, the smooth transition connection between the cutting cavity 1A, the blocking portion 211, and the first base plate 14 avoids the formation of a vortex inside the cutting cavity 1A as much as possible and improves the grass collection effect. A transition surface disclosed in this example is basically a flat surface or a slope with a relatively small angle of inclination. In this solution, the deck 1 and the rotary unit 2 have simple structures and are easy to manufacture and assemble, thereby reducing the cost. In an example, the blocking portion 211 may be a flat plate structure, a wavy plate structure, a curved plate structure, or a plate structure provided with a flap, which is not limited.

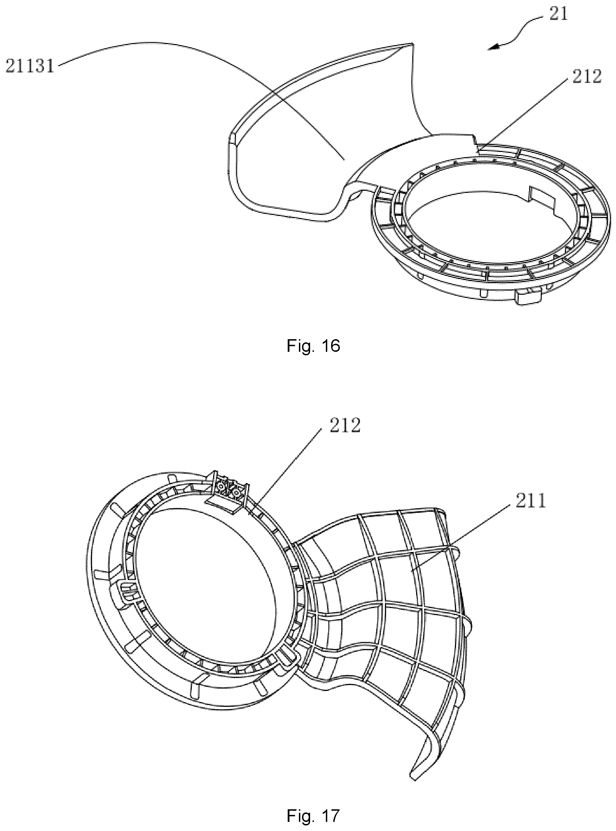

As shown in FIGS. 15 and 16, the blocking portion 211 is a circular structure from the circumferential direction and has a flat bottom surface 21131. In this example, the blocking portion 211 and the connecting portion 212 are an integrated structure, which has a simple shape, is easy to manufacture, has a small number of parts and a simple structure, and is easy to assemble.

In this example, as shown in FIGS. 14 to 18, the housing 11 is a hollow structure, the housing 11 has a U-shaped cross-section, and the housing 11 includes the second inner wall 112, the first inner wall 111, and a top wall connecting the second inner wall 112 and the first inner wall 111. Referring to FIG. 26, an annular plate 12 is disposed on a side facing the hollow structure. In this example, the annular plate 12 is connected to the second inner wall 112, the connecting portion 212 is circular and rotatably connected to the annular plate 12 in the same centerline, and the shape of the blocking portion 211 is adapted to the shape of the housing 11 so that the rotary body 21 closely fits the deck 1, thereby avoiding a gap in the middle and avoiding trapping the passing grass clippings. In an example, the power unit 5 is located above the hollow structure, and the cutter 6 is connected to the power unit 5 and located in the hollow structure of the housing 11.

As shown in FIGS. 16 to 18, the blocking portion 211 is U-shaped and includes a first vertical plate 2111, a second vertical plate 2112, and a horizontal plate 2113 connecting the first vertical plate 2111 and the second vertical plate 2112. A chamfered rounded corner is provided between the first inner wall 111 and the top wall of the housing 11, and a chamfered rounded corner is provided between the second inner wall 112 and the top wall so that the structure is smoother. Correspondingly, a chamfered rounded corner is provided between the first vertical plate 2111 and the horizontal plate 2113, and a chamfered rounded corner is provided between the second vertical plate 2112 and the horizontal plate 2113 so that the shape of the blocking portion 211 is adapted to the shape of the housing 11. In an example, the connecting portion 212 is in the shape of an annular cylinder, and the annular cylinder and the annular plate 12 are rotatably connected in the same centerline.

As shown in FIGS. 14 and 15, when the housing is viewed from bottom to top, the second inner wall 112 of the cutting cavity 1A is basically circular, and the first inner wall 111 of the cutting cavity 1A is also basically circular, which is conducive to the smooth movement of grass clippings in the cutting cavity 1A, thereby ensuring the mowing performance. Further, the blocking portion 211 is viewed from bottom to top, the first vertical plate 2111 is basically arc-shaped, and the second vertical plate 2112 is also basically arc-shaped so that the shape of the blocking portion 211 is adapted to the shape of the housing 11.

As shown in FIGS. 14 and 15, when the deck 1 is placed on a horizontal plane, the depth of the cutting cavity 1A of the housing 11 is basically the same in any section through the center of the housing 11 or the center of rotation of the cutter 6 and perpendicular to the horizontal plane, which is conducive to the smooth movement of grass clippings in the cutting cavity 1A, thereby ensuring the mowing performance. In this example, referring to FIG. 15, the depth of the cutting cavity 1A of the housing 11 is basically the same in any section through the center of the housing 11. When the housing 11 is a hollow structure and the cross section of the housing 11 is U-shaped, L1 is equal to or approximately equal to L2.

When a certain position in the cutting cavity 1A is relatively deep due to the molding of the housing 11, a deflector (not shown in the figure) may be set at this position, or the form of the chamber may be adjusted, so as to ensure that the depth is basically the same and eliminate the height difference, which is conducive to grass shredding, thereby ensuring the mowing performance.

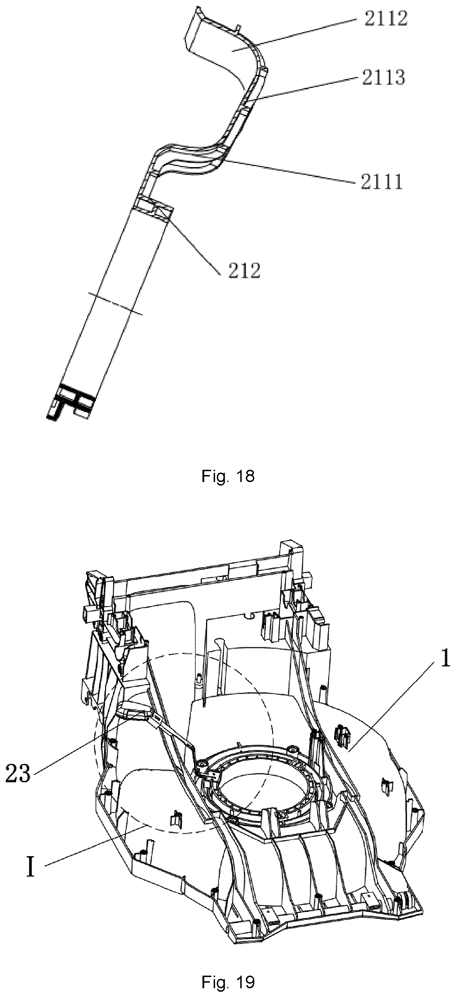

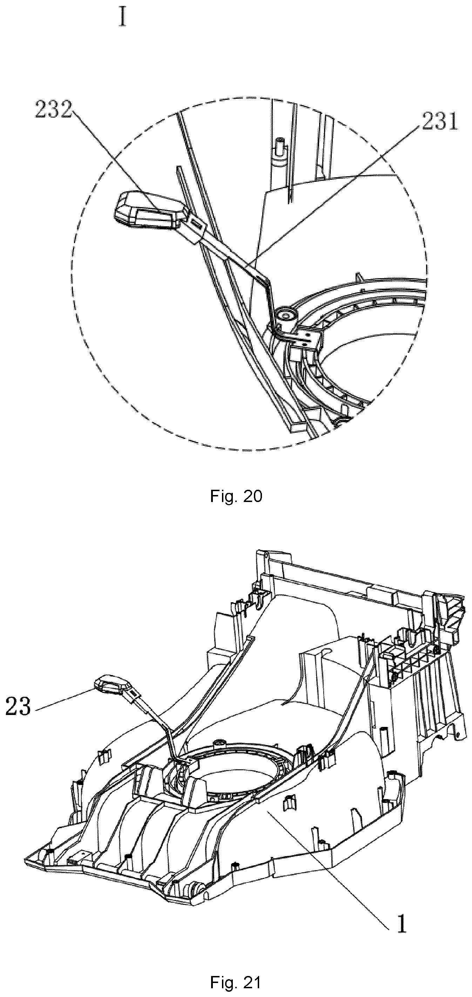

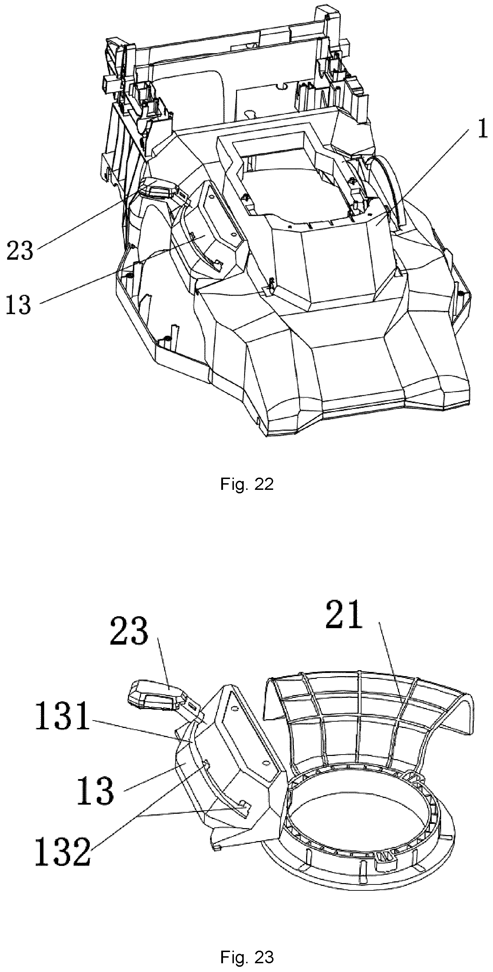

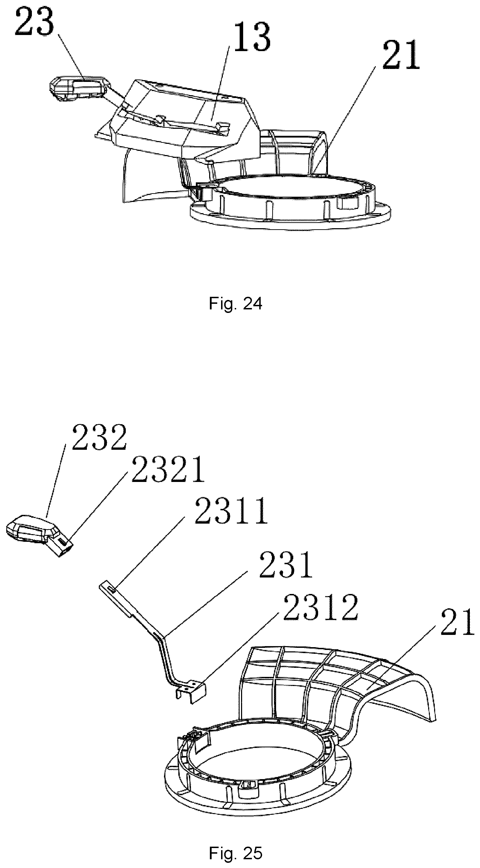

As shown in FIGS. 19 to 25, the mower 100 further includes an operation assembly 23 connected to the rotary unit 2. In an example, the operation assembly 23 is connected to the connecting portion 212, an engagement groove 132 is disposed on the deck 1, and the operation assembly 23 can be limited in the engagement groove 132. After the rotary body 21 is adjusted to the first position or the second position, the operation assembly 23 is clamped in the engagement groove 132 to fix the position of the rotary body 21. In an example, when the gap between the rotary unit 2 and the housing 11 is small enough, the effect of the engagement groove 132 is not apparent.

In an example, as shown in FIGS. 19 to 25, a support 13 is disposed at the top of the deck 1, a guide groove 131 is opened on the support 13 along the circumferential direction, the guide groove 131 and the first inner wall 111 of the housing 11 have the same center of rotation, the operation assembly 23 passes through and can be slidably connected to the guide groove 131, the engagement groove 132 is disposed on a groove wall of the guide groove 131, and the operation assembly 23 can be limited by the engagement groove 132. The operation assembly 23 can slide to different positions in the guide groove 131, so as to adjust the position of the rotary body 21 and achieve the switch between the grass shredding mode and the grass collection mode.

In an example, at least two engagement grooves 132 are provided. When the operation assembly 23 is clamped in the first engagement groove 132, the rotary body 21 is located at the first position, and when the operation assembly 23 is clamped in the second engagement groove 132, the rotary body 21 is located at the second position. In other examples, another engagement groove 132 may be provided so that the rotary body 21 is fixed at the corresponding position and the mower 100 is operated in the corresponding mode, which may be set according to actual situations without limitation. In other examples, the engagement groove 132 may be replaced with other structures without limitation. For example, an adsorption member is provided between the operation assembly 23 and the guide groove 131, and when the operation assembly 23 is disposed at a corresponding position, the operation assembly 23 is fixed to the corresponding position of the guide groove 131 by the adsorption member.

In this example, the support 13 may be a shell-like hollow structure or a solid structure, as long as the support 13 can support the operation assembly 23. In an example, the support 13 and the deck 1 may be an integrated structure or a split structure, which is not limited.

In an example, the operation assembly 23 includes an elastic manipulation rod 231 and a handle 232 detachably connected to an end of the manipulation rod 231, and the connecting portion 212 is detachably connected to the other end of the manipulation rod 231. When the manipulation rod 231 is clamped in the engagement groove 132, the end of the handle 232 abuts against the outer peripheral surface of the support 13. Using the elasticity of the manipulation rod 231, the manipulation rod 231 is clamped in the engagement groove 132 so that the structure is simple and quick to install. In an example, the manipulation rod 231 may be a steel construction bar with better elasticity.

In this example, the manipulation rod 231 is inserted into the handle 232, and a snap fit buckle 2311 on the manipulation rod 231 snaps into a slot 2321 of the handle 232 to achieve the locking of the manipulation rod 231 and the handle 232. When the handle 232 and the manipulation rod 231 need to be detached, the snap fit buckle 2311 is pressed to achieve the unlocking of the manipulation rod 231 and the handle 232.

In this example, a connecting seat 2312 is connected to the other end of the manipulation rod 231, and the connecting seat 2312 is connected to the connecting portion 212 by screws or other fasteners.

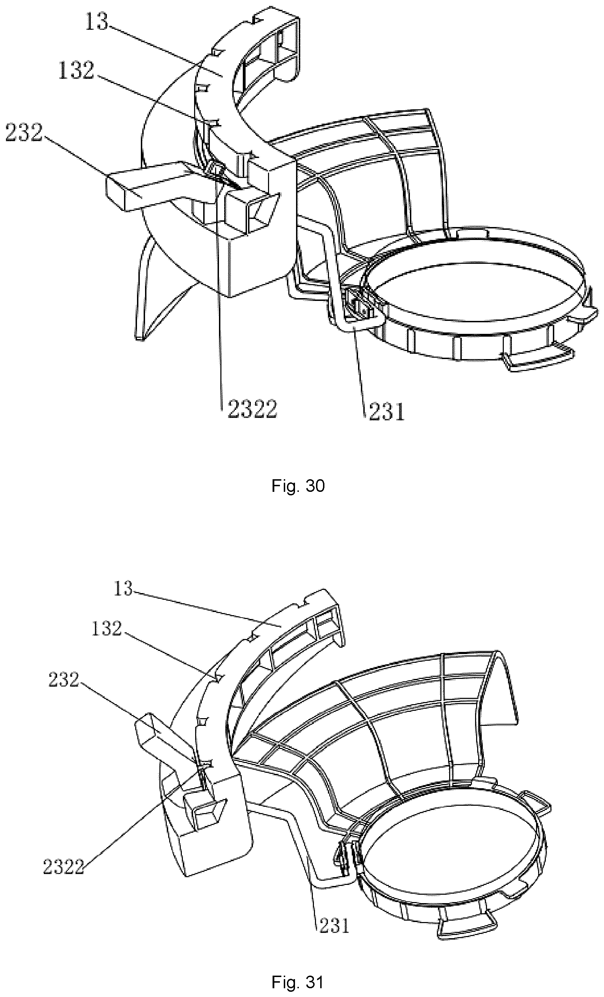

In an example, as shown in FIGS. 30 to 32, the operation assembly 23 includes the manipulation rod 231 and the handle 232 with a positioning portion 2322, the connecting portion 212 is rotatably connected to an end of the manipulation rod 231, and the handle 232 is elastically connected to the manipulation rod 231 so that the positioning portion 2322 can be limited in the engagement groove 132. In an example, the manipulation rod 231 is substantially L-shaped, a bent structure is disposed at an end of the manipulation rod 231, the bent structure is rotatably connected to the connecting portion 212, a pin 233 is fixed to the other end of the manipulation rod 231, the handle 232 is rotatably connected to the pin 233, a first torsion spring 234 is fixed to the pin 233, and an extended end of the first torsion spring 234 abuts against the handle 232. The manipulation rod 231 is a rigid rod. The handle 232 is pressed down so that the positioning portion 2322 is disengaged from the engagement groove 132 to achieve unlocking, and the operation assembly 23 is rotatable. When the handle 232 is released from the hand, the handle 232 automatically springs up to the engagement groove 132 since the first torsion spring 234 is reset, and the operation assembly 23 is not rotatable and locked.

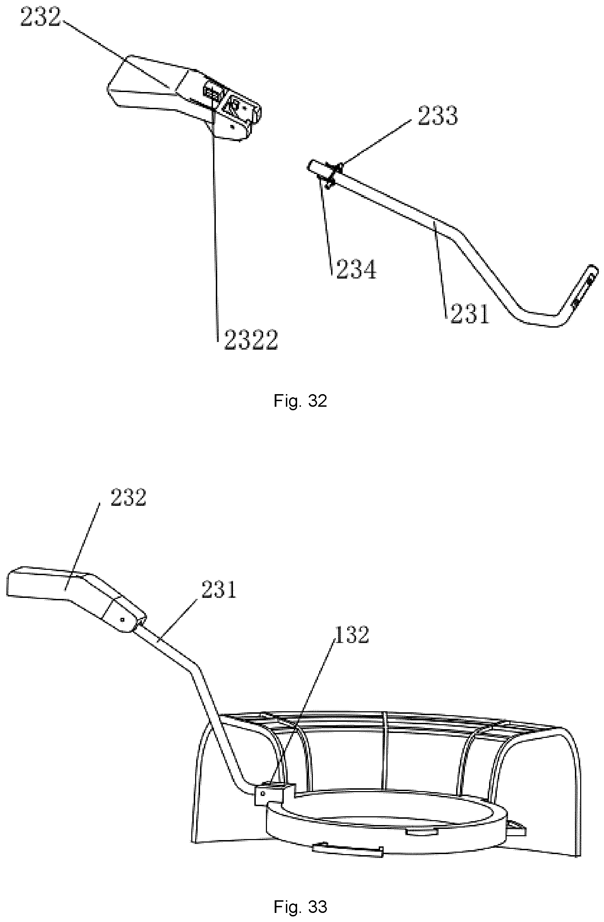

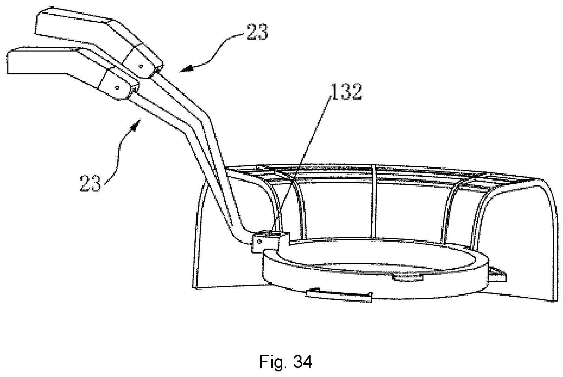

In an example, as shown in FIGS. 33 and 34, the operation assembly 23 includes the manipulation rod 231, and the manipulation rod 231 is elastically connected to the deck 1 so that the manipulation rod 231 can be limited in the engagement groove 132. In an example, the manipulation rod 231 is connected to the connecting portion 212 through a second torsion spring (not shown in the figure), the engagement groove 132 is opened above the connecting portion 212, and the handle 232 is pressed down so that the manipulation rod 231 is disengaged from the engagement groove 132 to achieve unlocking, and the operation assembly 23 is rotatable. When the handle 232 is released from the hand, the manipulation rod 231 automatically springs up to the engagement groove 132 since the second torsion spring is reset, and the operation assembly 23 is not rotatable and locked.

It is to be understood that the cutter 6 may be a single blade, two blades, or multiple blades. In an example, the power unit 5 may include one drive motor or multiple drive motors, and the power unit 5 and the cutter 6 may include the combination cases described below. In the first case, the combination includes one drive motor and one blade, the drive motor drives a single blade, the mode is relatively simple, and different working modes may be changed by adjusting the rotational speed of the drive motor. In the second case, that is, in this example, as shown in FIG. 27, the combination includes two blades and one drive motor, one drive motor drives two blades at the same time, the number of blades is increased, the cutting effect is improved, and multiple blades may be included here. In the third case, the combination includes multiple drive motors and multiple blades, each drive motor drives one blade, and the cutting speed may be changed by changing the rotational speed of the drive motor, or part of the drive motors may be selected to work and the other part of the drive motors does not work, so as to change the cutting intensity and increase the working modes with more options. The specific structure may be selected and set according to actual situations without limitation.

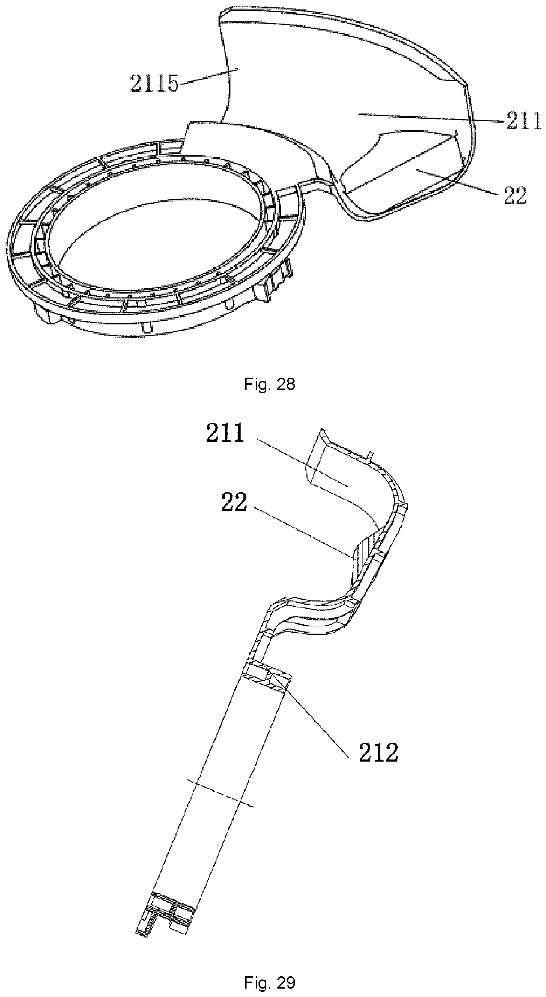

As shown in FIGS. 28 and 29, in an example, the rotary unit 2 further includes a protrusion 22 convexly disposed on the blocking portion 211. In an example, the protrusion 22 is connected to the rear end of the blocking portion 211 during rotation from the second position to the first position.

The protrusion 22 is provided so that the protrusion 22 can effectively block the grass clippings in the grass shredding mode, the grass clippings fall evenly in the cutting cavity 1A, and the grass clipping shredding effect is improved. In the grass collection mode, the protrusion 22 on the blocking portion 211 can restrain the rotating airflow in the cutting cavity 1A to a certain extent, making the airflow more conducive to the collecting of grass clippings through the first outlet 1B to the grass discharge passage 1C.

In an example, the protrusion 22 and the blocking portion 211 are an integrally formed structure. The protrusion 22 may be located on the first vertical plate 2111, the second vertical plate 2112, and the horizontal plate 2113 of the blocking portion 211, or the protrusion 22 may be located in the front, middle, and rear sections of the blocking portion 211 when the rotary unit 2 rotates from the second position to the first position, which is not limited.

Apparently, the preceding examples of the present invention are merely examples for a clear description of the present invention and are not intended to limit implementations of the present invention.

## Claims

1. A mower (100), comprising:
a cutter (6) consisting of at least one blade;
a deck (1) comprising a housing (11), wherein the housing (11) is formed with a cutting cavity (1A), and the cutting cavity (1A) connects with a grass discharge passage (1C) through a first outlet (1B);
a power unit (5) for driving the cutter (6) to rotate in the cutting cavity (1A); and
a rotary unit (2) comprising a rotary body (21), wherein the rotary body (21) comprises a blocking portion (211) and a connecting portion (212) connected to each other, and the connecting portion (212) is rotatably connected to the housing (11); the rotary unit (2) is capable of rotating to a first position or a second position, wherein when the rotary unit (2) is at the first position, the blocking portion (211) blocks the first outlet (1B); and when the rotary unit (2) is at the second position, the first outlet (1B) is opened;
wherein the deck (1) further comprises a first base plate (14), the first base plate (14) is at least partially located below the rotary unit (2), and the first base plate (14) contacts or mates with the blocking portion (211) to prevent the blocking portion (211) from moving downward;
wherein the deck (1) further comprises a second base plate (15), the second base plate (15) is connected to the first base plate (14), the second base plate (15) and the first base plate (14) are mounted to the housing (11), the second base plate (15) is also located below the rotary unit (2), and the second base plate (15) is in contact with the blocking portion (211), or the second base plate (15) mates with the blocking portion (211) with a gap between the second base plate (15) and the blocking portion (211), wherein a third position is positioned between the first position and the second position, and the rotary unit (2) is rotatable to the third position so that the first outlet (1B) is partially opened;
wherein when the housing (11) is viewed from bottom to top, the cutting cavity (1A) is enclosed by a first inner wall (111) which is basically circular;
wherein the blocking portion (211) is U-shaped and includes a first vertical plate (2111) and a second vertical plate (2112), wherein a horizontal plate (2113) is configured to connect the first vertical plate (2111) and the second vertical plate (2112);
wherein a chamfered rounded corner is provided between the first inner wall (111) and a top wall of the housing (11), a chamfered rounded corner is provided between a second inner wall (112) and the top wall, a chamfered rounded corner is provided between the first vertical plate (2111) and the horizontal plate (2113), and a chamfered rounded corner is provided between the second vertical plate (2112) and the horizontal plate (2113);
wherein a first surface (2114) is on an edge of the second vertical plate (2112); and the first surface (2114) faces downwards and is parallel to a horizontal plane when in operation;
wherein, when the blocking portion (211) is at the first position, the first surface (2114) abuts against a second surface (142) of the first base plate (14), and no matter the blocking portion (211) is at the first position or the second position, the second surface (142) or a third surface (151) always abuts against the first surface (2114) and is configured to be used for pressing the blocking portion (211) so that the rotary body (21) is restricted.

2. The mower (100) of claim 1, wherein the first base plate (14) mates with the blocking portion (211) with a gap between the first base plate (14) and the blocking portion (211).

3. The mower (100) of claim 1, wherein the housing (11) and the first base plate (14) form the grass discharge passage (1C), the first base plate (14) is disposed on a lower side of the housing (11), and grass clippings are collected through the grass discharge passage (1C).

4. The mower (100) of claim 2, wherein the blocking portion (211) of the rotary unit (2) comprises a first surface (2114) facing the first base plate (14), and a distance between the first surface (2114) and the first base plate (14) is greater than or equal to 0 and less than or equal to 4 mm.

5. The mower (100) of claim 1, wherein when the housing (11) is viewed from bottom to top, the cutting cavity (1A) is enclosed by the second inner wall (112), the first inner wall (111) is located on an inner side of the second inner wall (112), and the second inner wall (112) is basically circular.

6. The mower (100) of claim 1, wherein the blocking portion (211) is rotatably connected to an inner side of the housing (11), and the rotary unit (2) further comprises a protrusion (22) convexly disposed on the blocking portion (211).

7. The mower (100) of claim 1, wherein the operation assembly (23) is connected to the rotary unit (2), wherein an engagement groove (132) is disposed on the deck (1), and the operation assembly (23) is capable of being limited in the engagement groove (132).

8. The mower (100) of claim 2, wherein the blocking portion (211) of the rotary unit (2) comprises the first surface (2114) facing the first base plate (14), and a distance between the first surface (2114) and the first base plate (14) is greater than or equal to 0 and less than or equal to 2 mm.

9. The mower (100) of claim 5, wherein the first base plate (14) and the second base plate (15) are integrally formed.

10. The mower (100) of claim 1, wherein the connecting portion (212) and the blocking portion (211) are an integrated structure.

11. The mower (100) of claim 1, wherein the engagement groove (132) is disposed on a groove wall of the guide groove (131), and the operation assembly (23) can be limited by the engagement groove (132).

## Patentansprüche

1. Ein Mäher (100), umfassend:
eine Schneideinrichtung (6), bestehend aus mindestens einer Klinge;
ein Deck (1), das ein Gehäuse (11) umfasst, wobei das Gehäuse (11) mit einem Schneidhohlraum (1A) ausgebildet ist, und der Schneidhohlraum (1A) über einen ersten Auslass (1B) mit einem Grasauslassdurchgang (1C) verbunden ist;
eine Antriebseinheit (5) zum Antreiben der Schneideinrichtung (6) zum Rotieren in dem Schneidhohlraum (1A); und
eine Dreheinheit (2), die einen Drehkörper (21) umfasst, wobei der Drehkörper (21) einen Blockierabschnitt (211) und einen Verbindungsabschnitt (212) umfasst, die miteinander verbunden sind, und der Verbindungsabschnitt (212) drehbar mit dem Gehäuse (11) verbunden ist; die Dreheinheit (2) in der Lage ist, in eine erste Position oder eine zweite Position zu drehen, wobei, wenn sich die Dreheinheit (2) in der ersten Position befindet, der Blockierabschnitt (211) den ersten Auslass (1B) blockiert; und wenn sich die Dreheinheit (2) in der zweiten Position befindet, der erste Auslass (1B) geöffnet ist;
wobei das Deck (1) ferner eine erste Grundplatte (14) umfasst, die erste Grundplatte (14) zumindest teilweise unterhalb der Dreheinheit (2) angeordnet ist, und die erste Grundplatte (14) mit dem Blockierabschnitt (211) in Kontakt steht oder mit dem Blockierabschnitt (211) zusammenwirkt, um zu verhindern, dass sich der Blockierabschnitt (211) nach unten bewegt;
wobei das Deck (1) ferner eine zweite Grundplatte (15) umfasst, die zweite Grundplatte (15) mit der ersten Grundplatte (14) verbunden ist, die zweite Grundplatte (15) und die erste Grundplatte (14) an dem Gehäuse (11) montiert sind, die zweite Grundplatte (15) ebenfalls unterhalb der Dreheinheit (2) angeordnet ist, und die zweite Grundplatte (15) mit dem Blockierabschnitt (211) in Kontakt steht, oder die zweite Grundplatte (15) mit dem Blockierabschnitt (211) mit einem Spalt zwischen der zweiten Grundplatte (15) und dem Blockierabschnitt (211) zusammenwirkt, wobei eine dritte Position zwischen der ersten Position und der zweiten Position angeordnet ist, und die Dreheinheit (2) in die dritte Position drehbar ist, so dass der erste Auslass (1B) teilweise geöffnet ist;
wobei, wenn das Gehäuse (11) von unten nach oben betrachtet wird, der Schneidhohlraum (1A) durch eine erste Innenwand (111) umschlossen ist, die im Wesentlichen kreisförmig ist;
wobei der Blockierabschnitt (211) U-förmig ist und eine erste Vertikalplatte (2111) und eine zweite Vertikalplatte (2112) umfasst, wobei eine Horizontalplatte (2113) dazu ausgebildet ist, die erste Vertikalplatte (2111) und die zweite Vertikalplatte (2112) zu verbinden;
wobei eine abgeschrägte abgerundete Ecke zwischen der ersten Innenwand (111) und einer Oberwand des Gehäuses (11) vorgesehen ist, eine abgeschrägte abgerundete Ecke zwischen einer zweiten Innenwand (112) und der Oberwand vorgesehen ist, eine abgeschrägte abgerundete Ecke zwischen der ersten Vertikalplatte (2111) und der Horizontalplatte (2113) vorgesehen ist, und eine abgeschrägte abgerundete Ecke zwischen der zweiten Vertikalplatte (2112) und der Horizontalplatte (2113) vorgesehen ist;
wobei eine erste Fläche (2114) an einer Kante der zweiten Vertikalplatte (2112) angeordnet ist; und die erste Fläche (2114) nach unten weist und während des Betriebs parallel zu einer horizontalen Ebene ist;
wobei, wenn sich der Blockierabschnitt (211) in der ersten Position befindet, die erste Fläche (2114) an einer zweiten Fläche (142) der ersten Grundplatte (14) anliegt, und unabhängig davon, ob sich der Blockierabschnitt (211) in der ersten Position oder der zweiten Position befindet, die zweite Fläche (142) oder eine dritte Fläche (151) stets an der ersten Fläche (2114) anliegt und dazu ausgebildet ist, zum Drücken des Blockierabschnitts (211) verwendet zu werden, so dass der Drehkörper (21) beschränkt ist.

2. Der Mäher (100) nach Anspruch 1, wobei die erste Grundplatte (14) mit dem Blockierabschnitt (211) mit einem Spalt zwischen der ersten Grundplatte (14) und dem Blockierabschnitt (211) zusammenwirkt.

3. Der Mäher (100) nach Anspruch 1, wobei das Gehäuse (11) und die erste Grundplatte (14) den Grasauslassdurchgang (1C) bilden, die erste Grundplatte (14) an einer unteren Seite des Gehäuses (11) angeordnet ist, und Grasschnitt durch den Grasauslassdurchgang (1C) gesammelt wird.

4. Der Mäher (100) nach Anspruch 2, wobei der Blockierabschnitt (211) der Dreheinheit (2) eine erste Fläche (2114) umfasst, die der ersten Grundplatte (14) zugewandt ist, und ein Abstand zwischen der ersten Fläche (2114) und der ersten Grundplatte (14) größer als oder gleich 0 und kleiner als oder gleich 4 mm ist.

5. Der Mäher (100) nach Anspruch 1, wobei, wenn das Gehäuse (11) von unten nach oben betrachtet wird, der Schneidhohlraum (1A) durch die zweite Innenwand (112) umschlossen ist, die erste Innenwand (111) an einer Innenseite der zweiten Innenwand (112) angeordnet ist, und die zweite Innenwand (112) im Wesentlichen kreisförmig ist.

6. Der Mäher (100) nach Anspruch 1, wobei der Blockierabschnitt (211) drehbar mit einer Innenseite des Gehäuses (11) verbunden ist, und die Dreheinheit (2) ferner einen Vorsprung (22) umfasst, der konvex auf dem Blockierabschnitt (211) angeordnet ist.

7. Der Mäher (100) nach Anspruch 1, wobei die Betätigungsanordnung (23) mit der Dreheinheit (2) verbunden ist, wobei an dem Deck (1) eine Eingriffsnut (132) angeordnet ist, und die Betätigungsanordnung (23) in der Eingriffsnut (132) begrenzt werden kann.

8. Der Mäher (100) nach Anspruch 2, wobei der Blockierabschnitt (211) der Dreheinheit (2) die erste Fläche (2114) umfasst, die der ersten Grundplatte (14) zugewandt ist, und ein Abstand zwischen der ersten Fläche (2114) und der ersten Grundplatte (14) größer als oder gleich 0 und kleiner als oder gleich 2 mm ist.

9. Der Mäher (100) nach Anspruch 5, wobei die erste Grundplatte (14) und die zweite Grundplatte (15) einstückig ausgebildet sind.

10. Der Mäher (100) nach Anspruch 1, wobei der Verbindungsabschnitt (212) und der Blockierabschnitt (211) eine integrierte Struktur sind.

11. Der Mäher (100) nach Anspruch 1, wobei die Eingriffsnut (132) an einer Nutwand der Führungsnut (131) angeordnet ist, und die Betätigungsanordnung (23) durch die Eingriffsnut (132) begrenzt werden kann.

## Revendications

1. Une tondeuse (100), comprenant :
un dispositif de coupe (6) constitué d'au moins une lame ;
un plateau (1) comprenant un boîtier (11), dans lequel le boîtier (11) est formé avec une cavité de coupe (1A), et la cavité de coupe (1A) est reliée à un passage d'évacuation d'herbe (1C) par une première sortie (1B) ;
une unité de puissance (5) pour entraîner le dispositif de coupe (6) à tourner dans la cavité de coupe (1A) ; et
un ensemble rotatif (2) comprenant un corps rotatif (21), dans lequel le corps rotatif (21) comprend une portion de blocage (211) et une portion de connexion (212) reliées l'une à l'autre, et la portion de connexion (212) est reliée de manière rotative au boîtier (11) ; l'ensemble rotatif (2) est apte à tourner vers une première position ou une deuxième position, dans lequel lorsque l'ensemble rotatif (2) est à la première position, la portion de blocage (211) bloque la première sortie (1B) ; et lorsque l'ensemble rotatif (2) est à la deuxième position, la première sortie (1B) est ouverte ;
dans lequel le plateau (1) comprend en outre une première plaque de base (14), la première plaque de base (14) étant située au moins partiellement au-dessous de l'ensemble rotatif (2), et la première plaque de base (14) est en contact avec ou coopère avec la portion de blocage (211) pour empêcher la portion de blocage (211) de se déplacer vers le bas ;
dans lequel le plateau (1) comprend en outre une deuxième plaque de base (15), la deuxième plaque de base (15) étant reliée à la première plaque de base (14), la deuxième plaque de base (15) et la première plaque de base (14) étant montées sur le boîtier (11), la deuxième plaque de base (15) étant également située au-dessous de l'ensemble rotatif (2), et la deuxième plaque de base (15) est en contact avec la portion de blocage (211), ou la deuxième plaque de base (15) coopère avec la portion de blocage (211) avec un espace entre la deuxième plaque de base (15) et la portion de blocage (211), dans lequel une troisième position est positionnée entre la première position et la deuxième position, et l'ensemble rotatif (2) est apte à tourner vers la troisième position de sorte que la première sortie (1B) est partiellement ouverte ;
dans lequel, lorsque le boîtier (11) est vu du bas vers le haut, la cavité de coupe (1A) est entourée par une première paroi intérieure (111) qui est sensiblement circulaire ;
dans lequel la portion de blocage (211) est en forme de U et comprend une première plaque verticale (2111) et une deuxième plaque verticale (2112), dans lequel une plaque horizontale (2113) est configurée pour relier la première plaque verticale (2111) et la deuxième plaque verticale (2112) ;
dans lequel un coin arrondi chanfreiné est prévu entre la première paroi intérieure (111) et une paroi supérieure du boîtier (11), un coin arrondi chanfreiné est prévu entre une deuxième paroi intérieure (112) et la paroi supérieure, un coin arrondi chanfreiné est prévu entre la première plaque verticale (2111) et la plaque horizontale (2113), et un coin arrondi chanfreiné est prévu entre la deuxième plaque verticale (2112) et la plaque horizontale (2113) ;
dans lequel une première surface (2114) est sur un bord de la deuxième plaque verticale (2112) ; et la première surface (2114) est orientée vers le bas et est parallèle à un plan horizontal en fonctionnement ;
dans lequel, lorsque la portion de blocage (211) est à la première position, la première surface (2114) vient en appui contre une deuxième surface (142) de la première plaque de base (14), et que la portion de blocage (211) soit à la première position ou à la deuxième position, la deuxième surface (142) ou une troisième surface (151) vient toujours en appui contre la première surface (2114) et est configurée pour être utilisée pour presser la portion de blocage (211) de sorte que le corps rotatif (21) soit limité.

2. La tondeuse (100) selon la revendication 1, dans laquelle la première plaque de base (14) coopère avec la portion de blocage (211) avec un espace entre la première plaque de base (14) et la portion de blocage (211).

3. La tondeuse (100) selon la revendication 1, dans laquelle le boîtier (11) et la première plaque de base (14) forment le passage d'évacuation d'herbe (1C), la première plaque de base (14) est disposée sur un côté inférieur du boîtier (11), et des débris d'herbe sont collectés à travers le passage d'évacuation d'herbe (1C).

4. La tondeuse (100) selon la revendication 2, dans laquelle la portion de blocage (211) de l'ensemble rotatif (2) comprend une première surface (2114) faisant face à la première plaque de base (14), et une distance entre la première surface (2114) et la première plaque de base (14) est supérieure ou égale à 0 et inférieure ou égale à 4 mm.

5. La tondeuse (100) selon la revendication 1, dans laquelle, lorsque le boîtier (11) est vu du bas vers le haut, la cavité de coupe (1A) est entourée par la deuxième paroi intérieure (112), la première paroi intérieure (111) est située sur un côté intérieur de la deuxième paroi intérieure (112), et la deuxième paroi intérieure (112) est sensiblement circulaire.

6. La tondeuse (100) selon la revendication 1, dans laquelle la portion de blocage (211) est reliée de manière rotative à un côté intérieur du boîtier (11), et l'ensemble rotatif (2) comprend en outre une saillie (22) disposée de manière convexe sur la portion de blocage (211).

7. La tondeuse (100) selon la revendication 1, dans laquelle l'ensemble d'actionnement (23) est relié à l'ensemble rotatif (2), dans lequel une rainure d'engagement (132) est disposée sur le plateau (1), et l'ensemble d'actionnement (23) peut être limité dans la rainure d'engagement (132).

8. La tondeuse (100) selon la revendication 2, dans laquelle la portion de blocage (211) de l'ensemble rotatif (2) comprend la première surface (2114) faisant face à la première plaque de base (14), et une distance entre la première surface (2114) et la première plaque de base (14) est supérieure ou égale à 0 et inférieure ou égale à 2 mm.

9. La tondeuse (100) selon la revendication 5, dans laquelle la première plaque de base (14) et la deuxième plaque de base (15) sont formées d'une seule pièce.

10. La tondeuse (100) selon la revendication 1, dans laquelle la portion de connexion (212) et la portion de blocage (211) sont une structure intégrée.

11. La tondeuse (100) selon la revendication 1, dans laquelle la rainure d'engagement (132) est disposée sur une paroi de rainure de la rainure de guidage (131), et l'ensemble d'actionnement (23) peut être limité par la rainure d'engagement (132).
